# EUROPÄISCHE PATENTANMELDUNG

(11) **EP 1 293 761 A1**
(43) Veröffentlichungstag der Anmeldung: **19.03.2003**
(21) Anmeldenummer: 02019982.4
(22) Anmeldetag: 05.09.2002
(51) Int. Cl.: G01J 1/04

(54) **Optoelektronischer Sensor, Verwendung eines solchen Sensors sowie optoelektronischer Lenkwinkelsensor**

(30) Priorität: 07.09.2001 DE 10144147
(71) Anmelder: Leopold Kostal GmbH & Co. KG, 58507 Lüdenscheid (DE)
(72) Erfinder: Böbel, Ralf, 44269 Dortmund (DE); Müller, Andreas, 58708 Menden (DE); Koch, Holger, 59439 Holzwickede (DE)

(57) **Zusammenfassung**

Ein optoelektronischer Sensor mit einer Vielzahl optoelektronischer Wandlerelemente, angeordnet in einem ein- oder zweidimensionalen Array und mit einer zumindest ein eine Belichtung der Wandlerelemente des Arrays von aus unterschiedlichen Richtungen kommenden Lichtstrahlen ermöglichendes, lichtlenkendes Element aufweisenden, lichtdurchlässigen Abdeckung, ist dadurch gekennzeichnet, daß die lichtdurchlässige Abdeckung Teil eines das aus den Wandlerelementen gebildete Array insgesamt einschließenden, durchsichtigen Gehäuses ist, welches im Bereich der Abdeckung an seiner Außenseite zur Ausbildung des lichtlenkenden Elements strukturiert ist.

Ein optoelektronischer Lenkwinkelsensor zur Verwendung in Kraftfahrzeugen wird mit Hilfe des erfindungsgemäßen optoelektronischen Sensorelements vorteilhaft weitergebildet.

## Beschreibung

Gegenstand der Erfindung ist ein optoelektronischer Sensor mit einer Vielzahl optoelektronischer Wandlerelemente, angeordnet in einem ein- oder zweidimensionalen Array und mit einer zum Schutze der photosensitiven Oberfläche der Wandlerelemente dienenden lichtdurchlässigen Abdekkung. Ferner betrifft die Erfindung eine bevorzugte Verwendung eines solchen optoelektronischen Sensors sowie einen optoelektronisch arbeitenden Lenkwinkelsensor mit einem photosensitiven Sensor, gebildet aus einer Vielzahl optoelektronischer Wandlerelemente, angeordnet in einem ein- oder zweidimensionalen Array und mit einer zum Schutz der photosensitiven Oberfläche der Wandlerelemente dienenden lichtdurchlässigen Abdeckung, mit einer durch eine Lichtquelle beleuchteten Codescheibe zur Abbildung des Codes auf der photosensitiven Oberfläche des Sensors, einer Einrichtung zur Rundenzählung, optoelektronisch arbeitend, wobei der Code der Codescheibe und der Code eines Rundenzählungsgliedes aus unterschiedlichen Richtungen den Sensor beaufschlagen, und mit Mitteln zum Umlenken der Lichtstrahlen eines Codes in Richtung zur photosensitiven Oberfläche des Sensors.

Optoelektronische Sensoren bestehen aus einer Vielzahl benachbart zueinander angeordneter optoelektronischer Wandlerelemente in einer ein- oder zweidimensionalen Anordnung zueinander. Daher werden solche Sensoren auch als Zeilen- oder Kamerasensoren bezeichnet. Derartige Sensoren werden zum Wandeln von Lichtinformationen in Form von Bildern oder Signalen in elektrische Signale eingesetzt. Beispielsweise finden diese Sensoren Anwendung in einem Kraftfahrzeug, beispielsweise als Teil eines Regensensors, eines Lenkwinkelsensorsystems oder auch einer Abstandsdetektionseinrichtung. Herkömmlich beinhaltet jede Sensoranordnung einen eigenen photosensitiven Sensor als Empfänger, dessen Wandlerelemente in ein Gehäuse eingesetzt sind. Die photosensitive Oberfläche ist durch eine lichtdurchlässige Abdeckung geschützt. Aus DE 197 42 093 A1 ist bekannt geworden, daß ein einziger Sensor auch eingesetzt werden kann, um als photosensitiver Empfänger für unterschiedliche Abbildungssysteme genutzt werden zu können, wobei diese Abbildungssysteme sowohl auf unterschiedliche als auch auf gleiche Wandlerelemente oder Wandlerelementgruppen abbilden können. Zu diesem Zweck ist dem in einem Gehäuse befindlichen Array eine in diesem Dokument als Multifunktionsoptik bezeichnete Einrichtung vorgeschaltet, die lichtleitende und/oder lichtlenkende Mittel beinhalten kann. Diese Multifunktionsoptik ist unabhängig von dem Sensor befestigt.

Bei optoelektronisch arbeitenden Lenkwinkelsensoren für Kraftfahrzeuge besteht das Bedürfnis, auf einem einzigen optoelektronischen Sensor die codierte Lichtinformation einer beleuchteten Codescheibe sowie die Lichtinformation einer Rundenzähleinrichtung erfassen zu können. Aufgrund des in diesem unterhalb des Lenkrades befindlichen Bereich nur gering zur Verfügung stehenden Einbauraumes läßt sich die gemeinsame Nutzung eines einzigen Sensorarrays als photosensitiver Empfänger für die beiden Erfassungseinheiten - Codescheibe bzw. Rundenzähler - durch Vorschalten einer aus DE 197 42 093 A1 bekannten Multifunktionsoptik nicht ohne weiteres realisieren. Entsprechendes gilt ebenfalls auch für weitere Anordnungen, bei denen nur ein sehr geringer Einbauraum zur Verfügung steht und das dem Sensor zugeführte Licht aus unterschiedlichen Richtungen kommt.

Durch die DE 199 42 323 A1 sind ein Verfahren sowie eine Vorrichtung zur Mehrfacherfassung optoelektronischer Signale bekannt geworden, wobei ein Sensorelement durch auf verschiedenen Strahlenwegen herangeführte Lichtstrahlen beaufschlagt wird. Dem Sensorelement ist hierbei ein Reflektorelement zugeordnet, welches durch ein zusätzliches, durch einen Haltebügel gestütztes Halteelement in einer Position über dem Sensorelement gehalten ist und eine Umlekung eines seitlich herangeführten Lichtstrahls auf die lichtempfindliche Fläche des Sensorelements bewirkt. Durch die feste Zuordnung und die räumliche Nähe des Reflektorelements zu dem Sensorelement wird hier im Vergleich zu der zuvor beschriebenen Multifunktionsoptik bereits eine deutliche Verringerung des Bauraumbedarfs erreicht. Um eine optisch einwandfreie Funktion zu gewährleisten, müssen allerdings hohe Anforderungen an die Präzision beim Zusammenfügen der das Sensorelement umgebenden Einzelteile gestellt werden, was einen entsprechend großen Aufwand bei der Herstellung erfordert.

Der optoelektronische Sensor gemäß der vorliegenden Erfindung hat demgegenüber den Vorteil einfach und kostengünstig unter Verwendung etablierter Produktionsmethoden herstellbar zu sein und dennoch hohe Qualitätsmaßstäbe erfüllen zu können.

Dies ist dadurch ermöglicht, daß eine lichtdurchlässige Abdeckung des aus den Wandlerelementen gebildeten Arrays Teil eines das Array insgesamt einschließenden, durchsichtigen Gehäuses ist, welches im Bereich der Abdeckung an seiner Außenseite zur Ausbildung des lichtlenkenden Elements strukturiert ist

Ein solches Gehäuse wird als einstückiger Kunststoffkörper in einem Umgieß- bzw. Umspritzungsvorgang um das auf dem die elektrischen Anschlüsse umfassenden und als Träger fungierenden, sogenannten Lead-Frame gehaltene Sensor-Array herum geformt. Die äußere Kontur des Gehäuses und damit die lichtleitenden Flächen sind durch die Form des dabei verwendeten Werkzeugs fest vorgegeben und somit sicher und quasi beliebig oft reproduzierbar einzuhalten.

Der erfindungsgemäße optoelektronische Sensor kann vorteilhaft zur Weiterbildung eines optolektronischen Lenkwinkelsensor der eingangs genannten Art eingesetzt werden.

Bei dem erfindungsgemäßen Sensor werden im Gegensatz zum vorbekannten Stand der Technik keine zusätzlichen gesonderten lichtlenkenden Mittel eingesetzt, sondern diese sind Teil einer die photosensitive Oberfläche der Wandlerelemente schützenden und ohnehin vorhandenen Abdekkung. Diese Abdeckung ist Teil eines das Array insgesamt einschließenden Gehäuses. Die lichtlenkenden Elemente können beispielsweise lichtbrechend oder auch lichtreflektierend ausgebildet sein. Bei lichtreflektierend ausgebildeten lichtlenkenden Elementen kann beispielsweise das Gehäuse innere Reflektionsflächen aufweisen, an denen aus seitlichen Richtungen kommende Lichtströme zur photosensitiven Oberfläche der Wandlerelemente des Sensorarrays reflektiert werden. Diese Reflexionsflächen sind typischerweise Teil eines Prismas. Die lichtlenkenden Elemente sind zweckmäßigerweise seitlich zur lotrechten der photosensitiven Oberflächen der Wandlerelemente angeordnet, so daß eine Belichtung der Wandlerelemente aus lotrechter Richtung und aus einer oder mehreren seitlichen Richtungen erfolgen kann. Im Falle eines Einsatzes eines solchen Sensors im Rahmen eines Lenkwinkelsensorsystems ist der als photosensitiver Empfänger eingesetzte Sensor beispielsweise lotrecht belichtet durch den durch die Codescheibe durchgelassenen Lichtcode, während eine seitliche Lichtbeaufschlagung durch ein Rundenzählungsglied einer Rundenzähleinrichtung vorgesehen ist.

Neben einer bevorzugten Verwendung des Sensorarrays im Rahmen eines Lenkwinkelsensorsystems eignet sich dieser ebenfalls zur Bestückung von anderen optoelektronisch arbeitenden Weg- oder Winkelmeßeinrichtungen.

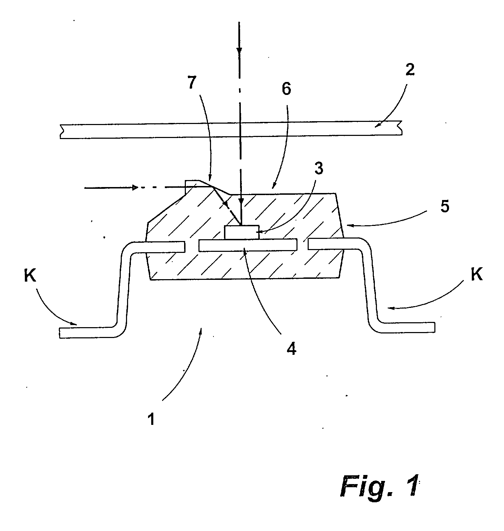

Nachfolgend ist die Erfindung unter Bezugnahme auf die beigefügte **Figur 1** beschrieben. Figur 1 zeigt in einer schematisierten Darstellung einen Querschnitt durch einen optoelektronischen Sensor 1, der Teil eines im übrigen nicht weiter dargestellten Lenkwinkelsensorsystems ist. Zur Orientierung ist oberhalb des Sensors 1 noch eine Codescheibe 2 zur Erfassung der Drehstellung der Codescheibe 2 relativ zum Sensor 1 abgebildet. Der Sensor 1 besteht aus einer Vielzahl einzelner und benachbart in einer Reihe zueinander angeordneter Wandlerelemente 3, die auf einem Träger 4 gehalten sind. Der Sensor 1 ist somit ein Zeilensensor. Die Wandlerelemente 3 sind elektrisch verbunden mit Kontaktfüßen K, mit denen der Sensor 1 auf einer Leiterplatte befestigt ist. Die auf dem Träger 4 angeordneten Wandlerelemente 3 sind in einem durchsichtigen Gehäuse 5 angeordnet, aus dem die Kontaktfüße K herausgeführt sind. Teil des Gehäuses 5 ist eine Abdeckung 6, die oberhalb der photosensitiven Oberfläche der Wandlerelemente 3 angeordnet ist und insbesondere zum Schutze der Wandlerelemente 3 dient. Im Bereich der Abdeckung 6 ist die Außenseite des Gehäuses 5 zur Ausbildung eines lichtlenkenden Elementes 7 strukturiert. Als lichtlenkendes Element 7 dient in dem in Figur 1 gezeigten Ausführungsbeispiel ein Prisma, an das die Lichtinformation eines in der Figur nicht dargestellten Rundenzählers aus einer seitlichen Richtung herangeführt ist. Das lichtlenkende Element 7 ist bezogen auf die eine lotrechte Belichtung des Sensors 1 benachbart zu den Wandlerelementen 3 angeordnet und geneigt ausgebildet, so daß die von dem Rundenzählungsglied aus seitlichen Richtungen kommende herangeführte Lichtinformation an dem Prisma 7 zur photosensitiven Oberfläche der Wandlerelemente 3 hin reflektiert wird. Die bezogen auf die Lotrechte zur photosensitiven Oberfläche benachbarte Anordnung des Prismas 7 gestattet eine Belichtung der photosensitiven Oberfläche der Wandlerelemente 3 auch aus lotrechter Richtung. Aus dieser Richtung kommend werden die Wandlerelemente 3 durch das von der Codescheibe 2 durchgelassene Licht zur Erfassung der Drehstellung der Codescheibe 2 zum Sensor 1 belichtet.

Eine Belichtung der Wandlerelemente 3 durch die beiden Codierungen kann gleichzeitig auf unterschiedlichen Wandlerelemente 3 oder auch zeitlich alternierend entsprechend einem bestimmten Belichtungstakt auf denselben Wandlerelementen 3 erfolgen.

### Bezugszeichenliste

- 1: Sensor
- 2: Codescheibe
- 3: Wandlerelement
- 4: Träger
- 5: Gehäuse
- 6: Abdeckung
- 7: Lichtlenkendes Element, Prisma

- K: Kontaktfuß

## Patentansprüche

1. Optoelektronischer Sensor mit einer Vielzahl optoelektronischer Wandlerelemente (3), angeordnet in einem ein- oder zweidimensionalen Array und mit einer zumindest ein eine Belichtung der Wandlerelemente (3) des Arrays von aus unterschiedlichen Richtungen kommenden Lichtstrahlen ermöglichendes, lichtlenkendes Element (7) aufweisenden, lichtdurchlässigen Abdeckung (6), **dadurch gekennzeichnet, daß** die lichtdurchlässige Abdeckung (6) Teil eines das aus den Wandlerelementen (3) gebildete Array insgesamt einschließenden, durchsichtigen Gehäuses (5) ist, welches im Bereich der Abdeckung (6) an seiner Außenseite zur Ausbildung des lichtlenkenden Elements (7) strukturiert ist.

2. Sensor nach Anspruch 1, **dadurch gekennzeichnet, daß** durch das zumindest eine lichtlenkende Element (7) gleiche Wandlerelemente (3) von aus unterschiedlichen Richtungen kommenden Lichtstrahlen belichtet werden können.

3. Sensor nach Anspruch 1 oder 2, **dadurch gekennzeichnet, daß** das lichtlenkende Element ein Prisma (7) ist.

4. Verwendung eines optoelektronischen Sensors nach einem der Ansprüche 1 bis 3 als photosensitiver Empfänger im Rahmen eines optoelektronisch arbeitenden Lenkwinkelsensors, wobei eine durch eine Codescheibe (2) codierte Belichtung des Sensors (1) aus einer ersten Richtung zur Erfassung der Stellung der Codescheibe (2) relativ zum Sensor (1) und aus einer zweiten Richtung durch ein Rundenzählungsglied erfolgt.

5. Verwendung nach Anspruch 4, **dadurch gekennzeichnet, daß** der durch die Codescheibe (2) codierte Lichtstrom aus lotrechter Richtung die photosensitive Oberfläche des Sensors (1) belichtet, während eine Belichtung des Sensors (1) durch das Rundenzählungsglied aus einer senkrecht dazu angeordneten Richtung erfolgt und durch ein Prisma (7) als Teil der lichtdurchlässigen Abdeckung (6) des Sensors (1) zur photosensitiven Oberfläche des Sensorarrays (1) hin umgelenkt wird.

6. Optoelektronischer Lenkwinkelsensor mit einem photosensitiven Sensor (1), gebildet aus einer Vielzahl optoelektronischer Wandlerelemente (3), angeordnet in einem ein- oder zweidimensionalen Array und mit einer zumindest ein eine Belichtung der Wandlerelemente (3) des Arrays von aus unterschiedlichen Richtungen kommenden Lichtstrahlen ermöglichendes, lichtlenkendes Element (7) aufweisenden, lichtdurchlässigen Abdeckung (6), mit einer durch eine Lichtquelle beleuchteten Codescheibe (2) zur Abbildung des Codes auf der photosensitiven Oberfläche des Sensors (1), einer Einrichtung zur Rundenzählung, optoelektronisch arbeitend, wobei der Code der Codescheibe (2) und der Code eines Rundenzählungsgliedes aus unterschiedlichen Richtungen den Sensor (1) beaufschlagen, und mit Mitteln zum Umlenken der Lichtstrahlen eines Codes in Richtung zur photosensitiven Oberfläche des Sensors (1), **dadurch gekennzeichnet, daß** die lichtdurchlässige Abdeckung (6) Teil eines das aus den Wandlerelementen (3) gebildete Array insgesamt einschließenden, durchsichtigen Gehäuses (5) ist, welches im Bereich der Abdeckung (6) an seiner Außenseite zur Ausbildung des lichtlenkenden Elements (7) strukturiert ist.

7. Lenkwinkelsensor nach Anspruch 6, **dadurch gekennzeichnet, daß** durch das lichtlenkende Element (7) gleiche Wandlerelemente (3) durch die beiden aus unterschiedlichen Richtungen kommenden Codierungen belichtet werden können.

8. Lenkwinkelsensor nach Anspruch 6 oder 7, **dadurch gekennzeichnet, daß** das lichtlenkende Element ein Prisma (7) ist.
